# EUROPÄISCHE PATENTSCHRIFT

(11) **EP 3 600 796 B1**
(45) Veröffentlichungstag und Bekanntmachung des Hinweises auf die Patenterteilung: **05.07.2023**
(21) Anmeldenummer: 18702666.1
(22) Anmeldetag: 30.01.2018
(51) Int. Cl.: B25J 15/00, B25J 19/00, B25J 19/02, B25J 19/06, B25J 13/08

(54) **ENDEFFEKTOR MIT VERSCHIEBBARER SCHUTZHÜLSE ZUR WERKSTÜCKBEARBEITUNG UND ROBOTERSYSTEM MIT EINEM ENDEFFEKTOR**
END EFFECTOR WITH MOVABLE PROTECTIVE SLEEVE FOR MACHINING WORKPIECES, AND ROBOT SYSTEM COMPRISING AN END EFFECTOR
EFFECTEUR TERMINAL À ENVELOPPE PROTECTRICE COULISSANTE POUR L'USINAGE DE PIÈCES ET SYSTÈME ROBOTISÉ COMPRENANT UN EFFECTEUR TERMINAL

(30) Priorität: 27.03.2017 DE 102017106455
(43) Veröffentlichungstag der Anmeldung: 05.02.2020
(73) Patentinhaber: ABB Schweiz AG, 5400 Baden (CH)
(72) Erfinder: GRAUL, Jan Sebastian, 60327 Frankfurt Main (DE); GOY, Christian, 61130 Nidderau (DE)
(74) Vertreter: Maiwald GmbH
(86) Internationale Anmeldenummer: PCT/EP2018/052240
(87) Internationale Veröffentlichungsnummer: WO 2018/177622

(56) Entgegenhaltungen:
- WO-A1-2017/036690
- DE-A1-102013 020 138
- DE-A1-102014 221 645
- DE-A1-102015 216 665
- DE-U1-202013 105 501
- GB-A- 571 794

## Beschreibung

Die vorliegende Erfindung betrifft einen Endeffektor zur Bearbeitung eines Werkstücks unter Kraftausübung.

Für zahlreiche Arten von Bearbeitung eines Werkstücks ist es erforderlich, dass mit einem Werkzeug Kraft auf das Werkstück ausgeübt wird, sei es um das Werkstück unmittelbar durch die Kraftausübung zu verformen, etwa beim Stanzen, Nieten etc., oder die Bearbeitung nur unter ausreichendem Druck erfolgreich ist, wie beim Punktschweißen, oder weil ohne Krafteinsatz der Eingriff des Werkzeugs verloren gehen kann, etwa beim Schrauben.

Wenn im Bewegungsbereich eines Automaten, der die Bearbeitung ausführt, sich eine Person aufhalten kann, muss sichergestellt sein, dass kein Körperteil der Person sich zum Zeitpunkt der Kraftausübung zwischen Werkzeug und Werkstück befinden kann und durch die Kraftausübung verletzt werden kann.

Aus DE 10 2007 035 958 A1 ist ein Endeffektor für einen Schraubautomaten bekannt, der, umgeben von einer zylindrischen Hülle, einen Werkzeughalter und ein durch den Werkzeughalter drehantreibbares Schraubwerkzeug aufweist. Werkzeughalter und Werkzeug sind im Innern der Hülle axial beweglich. Wenn sich beide in einer zurückgezogenen Stellung befinden, wird durch eine seitliche Öffnung der Hülle eine Schraube in die Hülle eingeführt und erreicht eine Stellung, in der ihr Kopf dem Schraubwerkzeug zugewandt ist, ihr Schaft in einer verjüngten Spitze der Hülle gehalten ist und ihre Spitze aus der Hülle vorspringt. In dieser Stellung kann das Schraubwerkzeug wieder vorgeschoben werden, um in den Kopf der Schraube einzugreifen und diese in ein Werkstück einzudrehen. Hilfsmittel, die verhindern könnten, dass ein Körperteil einer Person zwischen die Schraube und das Werkstück gelangt, sind nicht vorgesehen.

Aus DE 10 2013 020 138 A1 ist ein Robotersystem gemäß des Oberbegriffs von Anspruch 1 bekannt, bei dem eine verschiebbare Hülse in einer ein Werkzeug umhüllenden Schutzstellung durch einen Bolzen sicherbar ist.

Aufgabe der vorliegenden Erfindung ist, ein Robotersystem für die Bearbeitung eines Werkstücks zu schaffen, bei dem eine Verletzung einer Person durch die zur Bearbeitung ausgeübte Kraft ausgeschlossen werden kann.

Die Aufgabe wird gelöst durch ein Robotersystem mit den kennzeichnenden Merkmalen des Anspruchs 1.

Solange das Werkzeug in der Schutzstellung im Innern der Hülse versenkt ist, ist eine Kraftausübung durch das Werkzeug, sei es auf das Werkstück oder auf ein sich versehentlich zwischen dem Werkzeug und dem Werkstück oder einem anderen unbeweglichen Objekt befindliches Körperteil einer Person, ausgeschlossen; ein Zurückweichen der Hülse, durch welches das Werkzeug freigelegt wird, ist nur in der Nähe des Werkstücks möglich, wobei die zum Freigeben der Hülse erforderliche Nähe zum Werkstück klein genug festgelegt werden kann, damit zwischen der Hülle und dem Werkstück kein Körperteil Platzfindet.

In der Freigabestellung des Sperrkörpers sollte die Hülse durch eine von außen einwirkende Kraft frei zwischen der Schutzstellung und der Gebrauchsstellung verschiebbar ist. So kann die Hülse insbesondere durch Kontakt mit dem Werkstück in die Gebrauchsstellung verschoben werden, wenn der Werkzeughalter gegen das Werkstück vorrückt.

Es kann eine Feder oder ein anderes, eine rückstellende Kraft erzeugendes Rückstellmittel, vorgesehen sein, die bzw. das die Hülse in die Schutzstellung beaufschlagt. Die Feder bzw. das Rückstellmittel stellt sicher, dass die Hülse, wenn nach erfolgter Bearbeitung der Endeffektor wieder vom Werkstück abrückt, selbsttätig in die Schutzstellung zurückkehrt, so dass bei erneuter Annäherung an ein Werkstück der Schutz wieder wirksam ist. Der oben erwähnte Sensor kann Bestandteil des Endeffektors sein; unter Umständen kann er aber auch, wie nachfolgend noch genauer erläutert, in einem Robotersystem, das den Endeffektor umfasst, ein von dem Endeffektor verschiedenes Teil sein.

Wenn der Sensor Bestandteil des Endeffektors ist, dann kann er zweckmäßigerweise an der Hülse angebracht sein; so kann der Abstand zwischen dem Sensor und einem Objekt, der unterschritten werden muss, damit der Sensor die Nähe des Werkstücks detektiert, minimal gemacht werden; insbesondere kann ein berührungsempfindlicher Sensor oder ein Näherungssensor verwendet werden.

Um die Nähe des Endeffektors zum Werkstück zu detektieren, kann der im Endeffektor enthaltene Sensor für das Werkstück selbst empfindlich sein; es kann aber auch zweckmäßig sein, dass er anstatt auf das Werkstück auf dessen Halter anspricht, denn im Gegensatz zum Werkstück kann der Halter im Hinblick auf eine sichere Erkennung durch den Sensor optimiert sein.

Wenn der Sensor nicht Bestandteil des Endeffektors ist, dann kann er insbesondere Bestandteil eines Werkstückhalters sein.

In diesem Fall ist es natürlich nicht sinnvoll, dass der Sensor seine eigene Nähe zum Werkstück oder Werkstückhalter detektiert; stattdessen kann seine Nähe zum Werkzeug oder zum Werkzeughalter detektiert werden.

Ein solches Robotersystem kann ferner einen Energiewandler zum Betätigen des Werkzeugs und eine Steuereinheit umfassen, die eingerichtet ist, den Energiewandler nur in der Freigabestellung des Sperrkörpers zu betätigen. Welcher Art der Energiewandler ist, hängt von der Art der Bearbeitung bzw. dem dafür vorgesehenen Werkzeug ab. Wenn letzteres eine Schweißelektrode ist, kann der Energiewandler ein Netzteil sein, das elektrische Energie in Form eines Schweißstroms liefert; wenn das Werkzeug ein Schraub-, Bohr- oder Fräswerkzeug ist, dann ist der Energiewandler ein Motor, der mechanische Energie zum Antreiben der Werkzeugdrehung liefert, etc.

Wenn der Sensor Teil des Endeffektors ist, dann kann das durch den Sensor detektierbare Merkmal des Werkstückhalters eine Codierung sein, die eine hochselektive Unterscheidung des Werkstückhalters von anderen Objekten ermöglicht, so dass die Betätigung des Werkzeugs in Fällen, in denen der Endeffektor nicht korrekt am Werkstückhalter positioniert ist, mit hoher Sicherheit vermieden werden kann.

Wenn alternativ der Sensor am Werkstückhalter angeordnet ist, dann kann das detektierbare Merkmal insbesondere an der Hülse des Werkzeughalters vorgesehen sein.

Wenn der Sensor nicht unmittelbar auf die Nähe des Werkstücks anspricht, sondern auf die Nähe des Werkstückhalters zum Endeffektor, dann sollte der Werkstückhalter einen Hilfssensor zum Erfassen der Anwesenheit eines Werkstücks im Werkstückhalter aufweisen, und die Steuereinheit sollte eingerichtet sein, den Energiewandler nur in Anwesenheit eines Werkstücks zu betätigen.

Alternativ oder ergänzend kann der Werkstückhalter mehrere Merkmale aufweisen, deren Abstand voneinander veränderlich ist und die nur dann gemeinsam durch den Sensor detektierbar sind, wenn sie einen zum Festhalten des Werkstücks im Werkstückhalter geeigneten Abstand haben.

Der Sensor zum Erfassen der Anwesenheit des Werkstücks kann z.B. ein Schalter sein, der zum Schließen die Anwesenheit des Werkstücks im Werkstückhalter erfordert.

Die Antriebsmittel können einen ersten Roboterarm umfassen, der den Endeffektor nach einem der vorhergehenden Ansprüche mit einer Basis verbindet.

Vorzugsweise umfassen sie noch einen zweiten Roboterarm, der den Werkstückhalter mit der Basis verbindet.

Weitere Merkmale und Vorteile der Erfindung werden deutlich anhand der nachfolgenden Beschreibung von Ausführungsbeispielen unter Bezugnahme auf die beigefügten Figuren. Es zeigen:
- Fig. 1: einen schematischen Schnitt durch Endeffektor und Werkstückhalter eines erfindungsgemäßen Robotersystems in einer Phase der Annäherung des Endeffektors an den Werkstückhalter;
- Fig. 2: ein abgewandeltes Detail von Endeffektor und Werkstückhalter in einem Schnitt entlang einer Drehachse des Werkzeugs;
- Fig. 3: ein Detail des Werkzeughalters in einer Draufsicht in Richtung der Drehachse; und
- Fig. 4: einen schematischen Schnitt durch Endeffektor und Werkstückhalter während der Bearbeitung des Werkstücks.

Die Erfindung wird im Folgenden anhand eines Schraubvorgangs als Beispiel einer Bearbeitung erläutert. Das für die Bearbeitung verwendete Werkzeug 1 ist somit ein Schraubwerkzeug, und das zu bearbeitende Werkstück 2 umfasst eine Schraube 3 und zwei durch die Schraube 3 aneinander zu befestigende Bauteile 4 und 5.

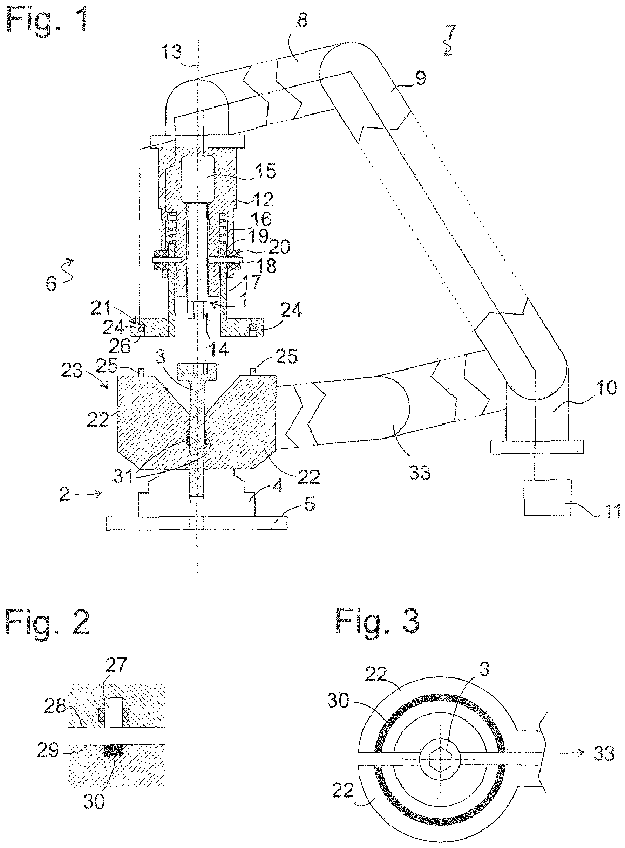

Ein Endeffektor 6 ist an einem in Fig. 1 stark schematisiert dargestellten Roboterarm 7 montiert. Der Roboterarm 7 umfasst in üblicher Weise mehrere Armabschnitte 8, 9, die untereinander, mit einer ortsfesten Basis 10 und mit dem Endeffektor 6 jeweils um ein oder mehrere Achsen mit Hilfe von nicht dargestellten Stellmotoren unter Kontrolle einer elektronischen Steuereinheit 11 schwenkbar sind.

Der Endeffektor 6 umfasst einen Werkzeughalter 12, der mit dem distalen Armabschnitt 9 schwenkbar verbunden ist, und an dem das Schraubwerkzeug 1 um eine Achse 13 drehbar gelagert ist. Eine Spitze 14 des Schraubwerkzeugs 1 steht über den Werkzeughalter 12 in Richtung des Werkstücks 2 vor. Ein Motor 15 zum Antreiben einer Drehung des Schraubwerkzeugs 1 kann in den Werkzeughalter 12 integriert sein.

In einer sich ringförmig um die Achse 13 erstreckenden Nut 16 des Werkzeughalters 12 ist eine Hülse 17 aufgenommen. Die Hülse 17 ist an dem Werkzeughalter 12 in Richtung der Achse 13 verschiebbar geführt; in der gezeigten Stellung springt sie soweit über den Werkzeughalter 12 vor, dass die Spitze 14 sich im Innern der Hülse 17 befindet. In dieser Schutzstellung ist die Hülse 17 in Bezug auf den Werkzeughalter 12 durch einen Sperrkörper 18 fixiert. Hier ist der Sperrkörper 18 ein Riegel, der ein Loch 19 der Hülse 17 durchsetzt und sie so formschlüssig fixiert; anstelle eines Riegels könnte, ähnlich dem Spannfutter einer Bohrmaschine, auch ein radial beweglicher Sperrkörper vorgesehen sein, der die Hülse 17 reibschlüssig fixiert, indem er sie gegen eine gegenüberliegende Wand der Nut 16 drückt.

Der Sperrkörper 18 ist radial zur Achse 13 durch ein Stellglied 20 unter Kontrolle der Steuereinheit 11 verstellbar.

Am von dem Werkzeughalter 12 abgewandten Ende der Hülse 17 ist ein Sensor 21 angebracht. Der Sensor 21 kann ein Näherungsschalter sein, der auf die Schraube 3 anspricht und die Steuereinheit 11 veranlasst, die Arretierung der Hülse 17 durch den Sperrkörper 18 zu lösen, wenn ein vorgegebener Grenzabstand zur Schraube 3 unterschritten ist. Dieser Grenzabstand ist so klein bemessen, dass seine Unterschreitung ausgeschlossen ist, solange sich ein Körperteil einer Person zwischen dem Ende der Hülse 17 und dem Werkstück 2 befinden kann.

Die Kraft, mit der der Roboterarm 7 den Endeffektor 6 an das Werkstück 2 heranführt, kann gering genug gehalten werden, um eine Verletzung durch Einklemmen sicher auszuschließen.

In der Ausgestaltung der Fig. 1, in der die Schraube 3 zwischen Spannbacken 22 eines Werkstückhalters 23 gehalten ist, kann der Sensor 21 eingerichtet sein, anstatt auf die Schraube 3 auf die Nähe zu den Spannbacken 22 anzusprechen und die Hülse 17 zu entriegeln, wenn zu diesen ein Grenzabstand erreicht oder unterschritten ist. Dieser Grenzabstand ist vorzugsweise Null, d.h. der Sensor 21 spricht an auf Berührung der Spannbacken 22. Ein solcher Sensor 21 kann im einfachsten Fall ein Schalter sein, der durch Andrücken der Hülse 17 an die Spannbacken 22 betätigt, insbesondere geschlossen wird.

Um sicherzustellen, dass der Schalter nicht durch Andrücken eines zwischen Hülse 17 und Werkstück 2 oder Werkstückhalter 23 eingeklemmten Fremdkörper wie etwa ein Körperteil einer Person betätigt wird, muss der Schalter eine Unterscheidung zwischen dem Werkstückhalter 23 und Fremdkörpern ermöglichen. Dies kann mit Hilfe von zueinander komplementären Konturen des Schalters und des Werkstückhalters 23 geschehen. Z.B. kann eine Taste des Schalters am Endeffektor 6 am Boden eines Schachts angeordnet sein, so dass sie nur von einem Vorsprung des Werkstückhalters 23 erreicht werden kann, der geeignet geformt ist, um im Laufe einer Annäherung des Endeffektors 6 an das Werkstück 2, vorzugsweise einer Annäherung in Richtung der Achse 13, in den Schacht einzudringen.

Ferner kann der Schalter mehrere unabhängig voneinander bewegliche Tasten umfassen, die nur dann alle gleichzeitig gedrückt werden, wenn sie jeweils komplementären Oberflächen des Werkstückhalters 23 in korrekter Orientierung gegenüberliegen.

In der Ausgestaltung der Fig. 1 liegt jeder der wenigstens zwei Spannbacken 22 eine solche Taste 24 gegenüber, und die Tasten 24 können nur dann gemeinsam gedrückt werden, wenn die Spannbacken 22 voneinander den zum Klemmen der Schraube 3 benötigten Abstand haben, da nur in diesem Abstand Vorsprünge 25 beider Spannbacken 22 in Schächte 26 an der Hülse 17 einrücken können. Fehlt eine Schraube, dann können die Spannbacken 22 so weit zusammenrücken, dass der Abstand zwischen den Vorsprüngen 25 deutlich kleiner ist als der zwischen den Schächten 26, so dass deswegen nicht beide Vorsprünge 25 gleichzeitig in einen Schacht 26 einrücken können; sind die Spannbacken 22 zu weit beabstandet, um eine Schraube zu klemmen, dann ist auch der Abstand zwischen den Vorsprüngen 25 größer als der zwischen den Schächten 26.

Die Tasten 24 können jeweils durch einen Näherungsschalter ersetzt werden, der das Eindringen eines Vorsprungs 25 in den Schacht 26 durch elektromagnetische Wechselwirkung erfasst.

Einer weiteren Abwandlung zufolge sind solche Näherungsschalter 27 oberflächenbündig in eine geschlossene ebene Stirnfläche 28 der Hülse 17 eingelassen, und die gegenüberliegende Stirnfläche 29 des Werkstückhalters 23 weist von den Näherungsschaltern 27 zu erfassen de Vorsprünge auf, oder es sind wie in Fig. 2 gezeigt Körper 30 mit von ihrer Umgebung abweichenden dielektrischen Eigenschaften, z.B. metallische Körper 30 in einer ansonsten nichtmetallischen Stirnfläche 29 oder magnetische Körper 30 in einer ansonsten nichtmagnetischen Stirnfläche 29 eingelassen, auf die die Näherungsschalter 27 ansprechen, sobald die Stirnflächen 28, 29 einander berühren.

Diese Vorsprünge oder Körper 30 können sich, wie in Fig. 3 gezeigt, über die Spannbacken 22 des Werkstückhalters 23 verteilt ringförmig um die Achse 13 erstrecken. Dadurch kann die Erfassung der Nähe des Endeffektors 6 zum Werkstück 2 weitgehend unabhängig gemacht werden von einer eventuellen, für den Schraubvorgang bedeutungslosen Verdrehung von Endeffektor 6 und Werkstückhalter 23 relativ zueinander um die Achse 13.

Wieder bezogen auf Fig. 1 kann ein Hilfssensor 31 vorgesehen sein, um die Anwesenheit einer Schraube 3 zwischen den Spannbacken 22 zu erfassen. Dieser Hilfssensor 31 kann z.B. durch Elektroden an beiden Spannbacken 22 gebildet sein, zwischen denen nur dann ein Strom fließen kann, wenn sie durch eine zwischen ihnen geklemmte Schraube 3 leitend verbunden sind.

Wenn der Sensor 21 die Nähe des Endeffektors 6 zum Werkstückhalter 23 erfasst hat und, falls vorhanden, der Hilfssensor 31 anzeigt, dass sich tatsächlich eine Schraube 3 im Werkstückhalter 23 befindet, betätigt die Steuereinheit 11 das Stellglied 20, um den Sperrkörper 18 aus dem Loch 19 der Hülse 17 zurückzuziehen und so eine Bewegung der Hülse 17 relativ zum Werkzeughalter 12 freizugeben. Die Steuereinheit 11 betätigt den Roboterarm 7, um den Endeffektor 6 in Richtung der Achse 13 auf das Werkstück 2 zuzubewegen; dabei wird die Hülse 17 in die Nut 16 des Werkzeughalters 12 zurückgeschoben und staucht dabei eine Feder 32. Anstelle der Feder 32 kann auch ein anderes, eine rückstellende Kraft erzeugendes Rückstellmittel vorgesehen sein.

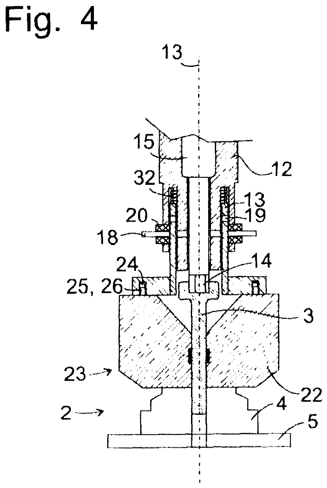

Die Bewegung des Werkzeughalters 12 in Richtung des Werkstücks 2 dauert an, bis die Spitze 14 des Schraubendrehers 14 über die Stirnfläche 28 der Hülse 13 vorspringt und in die Schraube 3 eingreift. Fig. 4 zeigt die so erreichte Gebrauchsstellung des Endeffektors 6 in einer zu Fig. 1 analogen Schnittdarstellung. Die Vorsprünge 25 sind in sämtliche Schächte 26 eingerückt und drücken gegen die Tasten 24. In diesem Stadium setzt die Steuereinheit 11 den Motor 15 in Gang, um die Schraube 3 in die Bauteile 4 und 5 einzudrehen.

Nach Eindrehen der Schraube 3 in die Bauteile 4, 5 wird der Endeffektor 6 wieder vom Werkstückhalter 23 abgehoben; daraufhin schiebt die Feder 32 die Hülse 17 wieder zurück in die in Fig. 1 gezeigte Schutzstellung, und der Sperrkörper 18 rückt wieder in das Loch 19 der Hülse 17 ein, um die Hülse 17 in der Schutzstellung zu arretieren.

Dem Ausführungsbeispiel der Fig. 1 zufolge ist auch der Werkstückhalter 23 mit Hilfe eines Roboterarms 33 beweglich. Um die Bearbeitung des nächsten Werkstücks 2 vorzubereiten, kann daher der Werkstückhalter 23 beiseite bewegt werden, um in einem Reservoir eine weitere Schraube 3 zwischen seinen Spannbacken zu greifen, währenddessen werden neue Bauteile 4, 5 bereitgelegt, und der Roboterarm 33 platziert die aufgenommene Schraube wie in Fig,1 gezeigt mit ihrer Spitze an einem Loch des Bauteils 4. Das Heranführen des Endeffektors 6 kann nun wie oben beschrieben wiederholt werden.

Für die oben beschriebenen Abläufe ist es ohne Belang, ob wie oben beschrieben ein Sensor am Endeffektor 6 angeordnet ist und Merkmale des Werkstückhalters 23 wie etwa die beschriebenen Vorsprünge 25 oder Körper 30 detektiert, oder ob ein entsprechender Sensor am Werkstückhalter Merkmale des Endeffektors 6 detektiert. Daher können die zu detektierenden Merkmale in gleichwertiger Weise an der Hülse 17 vorgesehen sein und einem Sensor des Werkstückhalters 23 gegenüberliegen.

Als Antriebsmittel für die Bewegung des Endeffektors 6 kommt anstelle des Roboterarms 6 beispielsweise auch ein Portalkran mit einer in wenigstens einem Freiheitsgrad beweglichen Laufkatze in Betracht.

### Bezugszeichen

- 1: Werkzeug
- 2: Werkstück
- 3: Schraube
- 4: Bauteil
- 5: Bauteil
- 6: Endeffektor
- 7: Roboterarm
- 8: Armabschnitt
- 9: Armabschnitt
- 10: Basis
- 11: Steuereinheit
- 12: Werkzeughalter
- 13: Achse
- 14: Spitze
- 15: Motor
- 16: Nut
- 17: Hülse
- 18: Sperrkörper
- 19: Loch
- 20: Stellglied
- 21: Sensor
- 22: Spannbacken
- 23: Werkstückhalter
- 24: Taste
- 25: Vorsprung
- 26: Schacht
- 27: Näherungsschalter
- 28: Stirnfläche
- 29: Stirnfläche
- 30: Körper
- 31: Hilfssensor
- 32: Feder
- 33: Roboterarm

## Patentansprüche

1. Robotersystem mit einem Werkstückhalter, einem Endeffektor (6) und Antriebsmitteln (7) zum Bewegen des Endeffektors (6) relativ zum Werkstückhalter (23), wobei der Endeffektor einen Werkzeughalter (12), ein an dem Werkzeughalter (12) vorspringend befestigtes Werkzeug (1) und eine Hülse (17), die an dem Werkzeughalter (12) zwischen einer das Werkzeug (1) umgebenden Schutzstellung und einer zum Werkzeughalter (12) hin verschobenen, wenigstens eine Spitze (14) des Werkzeugs (1) freigebenden Gebrauchsstellung verschiebbar ist, und einen Sperrkörper (18) umfasst, der zwischen einer Sperrstellung, in der er die Hülse (17) in der Schutzstellung blockiert, und einer Freigabestellung bewegbar ist, in der er eine Verschiebung der Hülse (17) in die Gebrauchsstellung zulässt,
**dadurch gekennzeichnet, dass**
der Sperrkörper durch einen die Nähe des Endeffektors (6) zu einem Werkstück (2) detektierenden Sensor (21) gesteuert ist und dass der Werkstückhalter (23) wenigstens ein durch den einen Teil des Endeffektors bildenden Sensor (21) detektierbares Merkmal (25,30) aufweist oder
der Werkzeughalter ein durch den am Werkstückhalter angeordneten Sensor detektierbares Merkmal aufweist.

2. Robotersystem nach Anspruch 1, **dadurch gekennzeichnet, dass** in der Freigabestellung des Sperrkörpers (18) die Hülse (17) durch eine von außen einwirkende Kraft frei zwischen der Schutzstellung und der Gebrauchsstellung verschiebbar ist.

3. Robotersystem nach Anspruch 1 oder 2, **dadurch gekennzeichnet, dass** die Hülse (17) durch ein eine rückstellende Kraft erzeugendes Rückstellmittel (32) in die Schutzstellung beaufschlagt ist.

4. Robotersystem nach einem der vorhergehenden Ansprüche, **dadurch gekennzeichnet, dass** der Endeffektor den Sensor (21) umfasst.

5. Robotersystem nach einem der vorhergehenden Ansprüche, **dadurch gekennzeichnet, dass** der Sensor (21) an der Hülse (17) angeordnet ist.

6. Robotersystem nach einem der vorhergehenden Ansprüche, **dadurch gekennzeichnet, dass** der Sensor (21) ein berührungsempfindlicher Sensor oder ein Näherungssensor ist.

7. Robotersystem nach einem der vorhergehenden Ansprüche, **gekennzeichnet durch** einen Energiewandler (15) zum Betätigen des Werkzeugs und eine Steuereinheit (11), die eingerichtet ist, den Energiewandler (15) nur in der Freigabestellung des Sperrkörpers (18) zu betätigen.

8. Robotersystem nach einem der vorhergehenden Ansprüche, **dadurch gekennzeichnet, dass** der Werkstückhalter (23) mehrere Merkmale (25, 30) aufweist, deren Abstand voneinander veränderlich ist und die nur dann gemeinsam durch den Sensor (21) detektierbar sind, wenn sie einen zum Festhalten des Werkstücks (3) im Werkstückhalter (23) geeigneten Abstand haben.

9. Robotersystem nach einem der vorhergehenden Ansprüche, **dadurch gekennzeichnet, dass** der Werkstückhalter (23) einen Hilfssensor (31) zum Erfassen der Anwesenheit eines Werkstücks (3) im Werkstückhalter (23) aufweist und die Steuereinheit (11) eingerichtet ist, den Energiewandler (23) nur in Anwesenheit eines Werkstücks (3) zu betätigen.

10. Robotersystem nach einem der vorhergehenden Ansprüche, **dadurch gekennzeichnet, dass** die Antriebsmittel einen ersten Roboterarm (7) umfassen, der den Endeffektor (6) mit einer Basis (10) verbindet.

11. Robotersystem nach einem der vorhergehenden Ansprüche, **dadurch gekennzeichnet, dass** die Antriebsmittel einen zweiten Roboterarm (33) umfassen, der den Werkstückhalter (23) mit der Basis (10) verbindet.

## Claims

1. Robot system having a workpiece holder, having an end effector (6), and having drive means (7) for moving the end effector (6) relative to the workpiece holder (23), wherein the end effector comprises a tool holder (12), a tool (1) which is fastened in a projecting manner to the tool holder (12), and a sleeve (17) which is displaceable on the tool holder (12) between a protection position, in which it surrounds the tool (1), and a use position, in which it is displaced towards the tool holder (12) and releases at least a tip (14) of the tool (1), and comprises a blocking body (18) which is moveable between a blocking position, in which it blocks the sleeve (17) in the protection position, and a release position, in which it permits displacement of the sleeve (17) into the use position,
**characterized in that**
the blocking body is controlled by a sensor (21) which detects the proximity of the end effector (6) to a workpiece (2), and **in that** the workpiece holder (23) has at least one feature (25, 30) which is detectable by the sensor (21), said sensor forming a part of the end effector, or
the tool holder has a feature which is detectable by the sensor, said sensor being arranged on the workpiece holder.

2. Robot system according to Claim 1, **characterized in that**, in the release position of the blocking body (18), the sleeve (17) is freely displaceable between the protection position and the use position by way of a force which acts from the outside.

3. Robot system according to Claim 1 or 2, **characterized in that** the sleeve (17) is loaded into the protection position by a restoring means (32) which generates a restoring force.

4. Robot system according to one of the preceding claims, **characterized in that** the end effector comprises the sensor (21).

5. Robot system according to one of the preceding claims, **characterized in that** the sensor (21) is arranged on the sleeve (17).

6. Robot system according to one of the preceding claims, **characterized in that** the sensor (21) is a touch-sensitive sensor or a proximity sensor.

7. Robot system according to one of the preceding claims, **characterized by** an energy converter (15) for actuating the tool, and a control unit (11) which is configured to actuate the energy converter (15) only when the blocking body (18) is in the release position.

8. Robot system according to one of the preceding claims, **characterized in that** the workpiece holder (23) has multiple features (25, 30) whose spacing to one another is variable and which are jointly detectable by the sensor (21) only if they have a spacing which is suitable for retention of the workpiece (3) in the workpiece holder (23).

9. Robot system according to one of the preceding claims, **characterized in that** the workpiece holder (23) has an auxiliary sensor (31) for detecting the presence of a workpiece (3) in the workpiece holder (23), and the control unit (11) is configured to actuate the energy converter (23) only when a workpiece (3) is present.

10. Robot system according to one of the preceding claims, **characterized in that** the drive means comprise a first robot arm (7) which connects the end effector (6) to a base (10).

11. Robot system according to one of the preceding claims, **characterized in that** the drive means comprise a second robot arm (33) which connects the workpiece holder (23) to the base (10).

## Revendications

1. Système robotisé doté d'un porte-pièce, d'un effecteur terminal (6) et de moyens d'entraînement (7) servant au déplacement de l'effecteur terminal (6) par rapport au porte-pièce (23), l'effecteur terminal comprenant un porte-outil (12), un outil (1) fixé de manière saillante au porte-outil (12) et un manchon (17) qui est mobile sur le porte-outil (12) entre une position de protection entourant l'outil (1) et une position d'utilisation décalée vers le porte-outil (12) et libérant au moins une pointe (14) de l'outil (1), et un corps de verrouillage (18) qui est déplaçable entre une position de verrouillage, dans laquelle il bloque le manchon (17) dans la position de protection, et une position de libération, dans laquelle il autorise un mouvement du manchon (17) dans la position d'utilisation, **caractérisé en ce que**
le corps de verrouillage est commandé par un capteur (21) détectant la proximité de l'effecteur terminal (6) par rapport à une pièce (2) et **en ce que** le porte-pièce (23) présente au moins une caractéristique (25, 30) pouvant être détectée par le capteur (21) formant une partie de l'effecteur terminal ou
le porte-outil présente une caractéristique pouvant être détectée par le capteur disposé sur le porte-pièce.

2. Système robotisé selon la revendication 1, **caractérisé en ce que**, dans la position de libération du corps de verrouillage (18), le manchon (17) est mobile librement entre la position de protection et la position d'utilisation sous l'effet d'une force agissant depuis l'extérieur.

3. Système robotisé selon la revendication 1 ou 2, **caractérisé en ce que** le manchon (17) est sollicité dans la position de protection par le biais de moyens de rappel (32) générant une force de rappel.

4. Système robotisé selon l'une des revendications précédentes, **caractérisé en ce que** l'effecteur terminal comprend le capteur (21).

5. Système robotisé selon l'une des revendications précédentes, **caractérisé en ce que** le capteur (21) est disposé sur le manchon (17).

6. Système robotisé selon l'une des revendications précédentes, **caractérisé en ce que** le capteur (21) est un capteur tactile ou un capteur de proximité.

7. Système robotisé selon l'une des revendications précédentes, **caractérisé par** un convertisseur d'énergie (15) servant à l'actionnement de l'outil et une unité de commande (11) qui est conçue pour n'actionner le convertisseur d'énergie (15) que dans la position de libération du corps de verrouillage (18).

8. Système robotisé selon l'une des revendications précédentes, **caractérisé en ce que** le porte-pièce (23) présente plusieurs caractéristiques (25, 30) dont l'écartement les unes par rapport aux autres est modifiable et qui ne peuvent être détectées ensemble par le capteur (21) que lorsqu'elles présentent un écartement approprié à l'assujettissement de la pièce (3) dans le porte-pièce (23).

9. Système robotisé selon l'une des revendications précédentes, **caractérisé en ce que** le porte-pièce (23) présente un capteur auxiliaire (31) servant à la détection de la présence d'une pièce (3) dans le porte-pièce (23) et l'unité de commande (11) est conçue pour n'actionner le convertisseur d'énergie (23) qu'en présence d'une pièce (3).

10. Système robotisé selon l'une des revendications précédentes, **caractérisé en ce que** les moyens d'entraînement comprennent un premier bras de robot (7) qui relie l'effecteur terminal (6) à une base (10).

11. Système robotisé selon l'une des revendications précédentes, **caractérisé en ce que** les moyens d'entraînement comprennent un deuxième bras de robot (33) qui relie le porte-pièce (23) à la base (10).
